# FASCICULE DE BREVET EUROPEEN

(11) **EP 4 536 449 B1**
(45) Date de publication et mention de la délivrance du brevet: **27.05.2026**
(21) Numéro de dépôt: 23731262.4
(22) Date de dépôt: 07.06.2023
(51) Int. Cl.: B25J 11/00, B26D 5/02, B26D 1/00, B26D 7/26, B26D 7/02, B26D 5/08, B26D 5/06, B26D 5/00, B26D 7/06, B65B 69/00, B65B 43/26

(54) **DISPOSITIF DE DECOUPE POUR REALISER UNE DECOUPE DANS UNE PAROI D'UNE BOITE**
SCHNEIDEVORRICHTUNG ZUR HERSTELLUNG EINES AUSSCHNITTS IN EINER WAND EINER BOX
CUTTING DEVICE FOR MAKING A CUT-OUT IN A WALL OF A BOX

(30) Priorité: 07.06.2022 FR 2205429
(43) Date de publication de la demande: 16.04.2025
(73) Titulaire: Exotec Product France, 59170 Croix (FR)
(72) Inventeur: RIDEZ, Jean-Marie, 62930 WIMEREUX (FR)
(74) Mandataire: Plasseraud IP
(86) Numéro de dépôt international: PCT/EP2023/065196
(87) Numéro de publication internationale: WO 2023/237588

(56) Documents cités:
- EP-A1- 3 412 416
- EP-A1- 3 851 259
- WO-A2-2014/064568

## Description

### Domaine technique

Le présent exposé concerne le domaine de l'ouverture de boites, notamment des boites d'emballage en carton. Il concerne en particulier un dispositif de découpe pour réaliser une découpe dans une paroi d'une boite, ainsi qu'une installation d'ouverture de boites comportant un tel dispositif de découpe. Une telle installation est le plus souvent utilisée dans les centres logistiques ou de distribution pour ouvrir de façon cadencée des boites en carton contenant des articles.

### Technique antérieure

Dans le passé, les boites en carton étaient ouvertes manuellement afin d'en extraire les articles et produits transportés. Ce travail manuel étant chronophage, parfois dangereux et susceptible d'endommager les produits contenus dans les boites, les centres logistiques se sont progressivement équipés d'installations pour ouvrir les boites de façon automatique.

Ces installations d'ouverture de boites mettent en œuvre une étape de découpe dans lequel un outil de découpe, comprenant généralement une lame, réalise des découpes continues ou des prédécoupes dans la boite.

Le dispositif de découpe est généralement fixé à une tête de robot multiaxes.

Par ailleurs, il est fréquent que les boites reçues en entrée de l'installation présentent des épaisseurs de paroi différentes. La profondeur de découpe des outils de découpe est généralement dimensionnée pour une épaisseur moyenne de paroi.

Dans le cas où la paroi à découper de l'une des boites est supérieure à cette épaisseur moyenne, il peut arriver que la profondeur de découpe ne soit pas suffisante pour permettre une ouverture propre de la paroi. Une intervention manuelle est alors nécessaire pour finaliser l'ouverture des boites, ce qui nuit à l'efficacité du processus d'ouverture.

Le document EP 3 851 259 A1 décrit une installation et un procédé de découpe et/ou de prédécoupe automatisée de boîte par perforations successives d'au moins une paroi d'une boîte calée en position de découpe.

### Exposé de l'invention

Un but de l'exposé est de proposer un dispositif de découpe remédiant aux inconvénients précités et pouvant s'adapter à différentes épaisseurs de parois.

L'invention atteint son but par un dispositif de découpe pour réaliser une découpe dans une paroi d'une boite, ledit dispositif de découpe s'étendant selon un axe longitudinal entre une partie de montage à une tête de robot et un organe de découpe muni d'une lame, la lame ayant au moins un premier bord de coupe, le dispositif de découpe comportant :
une première partie comprenant l'organe de découpe et un premier élément de support ;
une deuxième partie, mobile en translation par rapport à la première partie selon l'axe longitudinal, la deuxième partie comportant un patin d'appui ayant une surface d'appui, en sorte que le patin d'appui est mobile en translation par rapport à la lame selon l'axe longitudinal ;
dans lequel ledit dispositif de découpe présente au moins une première et une deuxième positions de découpe correspondant à au moins deux profondeurs de découpe différentes de la paroi, la lame faisant saillie axialement au-delà du patin d'appui lorsque le dispositif de découpe est dans sa première ou deuxième positions de découpe,
dans lequel, dans la première position de découpe, le patin d'appui est à une première distance axiale du premier élément de support, de sorte que la lame s'étend au-delà du patin d'appui sur une première longueur correspondant à une première profondeur de découpe, et dans lequel, dans la deuxième position de découpe, le patin d'appui est à une deuxième distance axiale du premier élément de support de sorte que la lame s'étend au-delà de la surface d'appui sur une deuxième longueur correspondant à une deuxième profondeur de découpe, la première profondeur de découpe étant supérieure à la deuxième profondeur de découpe,
dans lequel le dispositif de découpe comporte en outre un dispositif sélecteur pour sélectionner la première position de découpe ou la deuxième position de découpe.

On comprend que la première longueur est supérieure à la deuxième longueur. Le dispositif de découpe selon l'exposé offre donc au moins deux profondeurs de découpe. La première profondeur de découpe est une grande profondeur de découpe, par exemple de l'ordre de 7 mm, tandis que la deuxième profondeur de découpe est une plus petite profondeur de découpe, par exemple de l'ordre de 4 mm.

Le dispositif sélecteur permet de déterminer la distance axiale minimale entre le patin d'appui et le premier élément de support parmi les première et deuxième distances axiales, de façon à sélectionner la profondeur de découpe parmi les première et deuxième profondeurs de découpe.

On comprend que la profondeur de découpe correspond au plus à la longueur de la portion de la lame qui fait saillie au-delà de la surface d'appui du patin d'appui.

Le dispositif de découpe selon l'exposé s'adapte facilement et rapidement à l'épaisseur de la paroi à découper, ce qui permet de produire des découpes qualitatives, pour des parois d'épaisseurs différentes, sans avoir à stopper l'installation ou à prévoir plusieurs dispositifs de découpe.

La modification de la profondeur de découpe est donc réalisée via le dispositif sélecteur, ce qui peut être fait de manière manuelle ou automatique.

Dans ce dernier cas, l'automate de l'installation de découpe peut par exemple recevoir un signal de commande représentatif de l'épaisseur des parois des boites entrantes dans l'installation, et commander le dispositif sélecteur pour choisir la profondeur de découpe adaptée à ladite épaisseur.

On comprend que la modification de la profondeur peut être effectuée rapidement, par exemple immédiatement après avoir terminé la découpe de la paroi d'une première boite, et avant de découper la paroi de la boite suivante ayant une épaisseur différente.

Le dispositif de découpe selon l'invention présente donc l'avantage de pouvoir s'adapter rapidement à l'épaisseur des parois de la boite entrante dans l'installation de découpe et d'ouverture de boites.

On comprend par ailleurs que la modification de la profondeur de découpe est réalisée en ajustant la longueur de la portion de lame qui fait saillie axialement au-delà du patin d'appui lorsque ledit patin d'appui est en appui contre la paroi à découper.

Plus précisément, le dispositif sélecteur a pour fonction de limiter la longueur de la portion de lame qui dépasse axialement au-delà de la surface d'appui du patin d'appui.

En fonctionnement, le dispositif de découpe est déplacé vers la boite de sorte que la surface d'appui du patin d'appui vient en appui contre la paroi à découper. Une légère pression dirigée vers le bas est appliquée sur le dispositif de découpe de sorte que la première partie se rapproche de la deuxième partie (qui est en appui contre la paroi à découper), à la suite de quoi la lame pénètre dans la paroi à découper à une profondeur correspondant à la première ou bien à la deuxième profondeur de découpe. La profondeur de découpe, définie comme étant la distance maximale entre l'extrémité inférieure de la lame et la surface d'appui, correspond alors à la distance minimale entre le patin d'appui et le premier élément de support de la première partie.

Cette distance minimale entre le patin d'appui et le premier élément de support est préférentiellement atteinte, en utilisation, grâce à une ou plusieurs butées de fin de course limitant le déplacement axial de la deuxième partie par rapport à la première partie.

Sans sortir du cadre de la présente invention, le dispositif de découpe pourrait comporter davantage de positions de découpe.

Avantageusement, le dispositif sélecteur comporte un élément de butée de fin de course qui est rétractable et qui présente une position déployée dans laquelle la deuxième partie est en appui contre l'élément de butée de fin de course lorsque le dispositif de découpe est dans la deuxième position de découpe, et une position rétractée dans laquelle l'élément de butée de fin de course ne limite pas le déplacement axial de la deuxième partie par rapport à la première partie.

On comprend que, lorsque l'élément de butée est en position rétractée, le débattement axial de la première partie par rapport à la deuxième partie est supérieur à ce qu'il est lorsque l'élément de butée est en position déployée. Aussi, lorsque l'élément de butée est en position rétractée, la distance maximale entre l'extrémité inférieure de la lame et la surface d'appui est supérieure à ce qu'elle est lorsque l'élément de butée de fin de course est en position déployée et que la deuxième partie est en contact contre l'élément de butée, ce qui se produit lorsque la surface d'appui est en appui contre la paroi à découper.

L'élément de butée de fin de course permet donc de définir la deuxième profondeur de découpe.

De préférence, la première partie comporte en outre un actionneur pour déplacer l'élément de butée de fin de course entre sa position rétractée et sa position déployée.

Cet actionneur est par exemple un vérin pneumatique.

Encore de préférence, l'actionneur est configuré pour déplacer l'élément de butée selon une direction de déplacement qui est transversale à l'axe longitudinal. De préférence, la direction de déplacement est orthogonale à l'axe longitudinal.

Avantageusement, l'actionneur est fixé à un deuxième élément de support de la première partie, le deuxième élément de support étant situé à distance au-dessus du premier élément de support.

De préférence, le premier élément de support est relié au deuxième élément de support par l'intermédiaire d'au moins une entretoise.

De préférence, l'élément de butée de fin de course est disposé entre le premier élément de support et le deuxième élément de support.

Optionnellement, la première partie comporte en outre un élément de reprise d'effort situé axialement au-dessus de l'élément de butée de fin de course et, en position déployée, l'élément de butée de fin de course est en contact avec l'élément de reprise d'effort.

L'élément de reprise d'effort est par exemple une plaque métallique solidaire du deuxième élément de support.

On comprend que l'élément de reprise d'effort permet d'éviter un endommagement du deuxième élément de support lorsque la deuxième partie vient en butée contre l'élément de butée de fin de course.

Avantageusement, la deuxième partie comprend en outre au moins un premier bras solidaire du patin d'appui et monté coulissant par rapport au premier élément de support selon l'axe longitudinal, le premier bras traversant le premier élément de support, la deuxième partie comprenant en outre un élément de contact, relié au premier bras et dans lequel l'élément de contact est en appui contre l'élément de butée de fin de course lorsque le dispositif de découpe est en deuxième position de découpe.

On comprend que l'élément de contact est agencé pour venir en appui contre l'élément de butée de fin de course lorsque ce dernier est en position déployée.

Inversement, lorsque l'élément de butée de fin de course est en position rétractée, l'élément de contact ne coopère pas avec l'élément de butée de fin de course de sorte que le déplacement de l'élément de contact n'est pas limité par l'élément de butée de fin de course.

De préférence, le premier élément de support comporte un premier manchon de guidage dans lequel coulisse le premier bras.

De préférence, la deuxième partie comporte en outre un deuxième bras monté coulissant par rapport au premier élément de support et solidaire du patin d'appui, le deuxième bras traversant le premier élément de support, les premier et deuxième bras étant disposés de part et d'autre de l'organe de découpe et l'élément de contact constituant un élément de liaison reliant ensemble les premier et deuxièmes bras.

On comprend que l'élément de liaison est agencé pour venir en butée contre l'élément de butée de fin de course lorsque le dispositif de découpe est dans la deuxième position de découpe.

Avantageusement, la première partie comporte en outre un organe de butée de fin de course agencé pour stopper la course du patin d'appui en première position du dispositif de découpe lorsque l'élément de butée de fin de course est en position rétractée et, considéré selon l'axe longitudinal, l'élément de butée de fin de course est disposé entre l'organe de butée de fin de course et le patin d'appui.

De préférence, l'organe de butée de fin de course est fixé au deuxième élément de support. L'extension axiale de l'organe de butée de fin de course peut être réglée manuellement, par exemple par vissage, afin d'ajuster la première profondeur de découpe.

Avantageusement, pour faciliter le déplacement du patin d'appui sur la paroi à découper tout en assurant une pression contre la paroi à découper, le patin d'appui comporte en outre au moins une première roulette d'appui pour venir en appui contre la paroi de la boite.

La première roulette d'appui est montée en rotation sur un arbre qui est engagé dans le patin d'appui.

De préférence, le patin d'appui comporte une seconde roulette d'appui, les première et seconde roulettes d'appui étant disposées de part et d'autre de la lame.

Avantageusement, la lame comporte en outre un deuxième bord de coupe qui est opposé au premier bord de coupe, et la lame présente de préférence une forme en pointe.

La lame s'étend de préférence dans un plan qui est orthogonal à l'axe de la première roulette d'appui.

Avantageusement, la première partie est mobile en translation par rapport à la partie de montage selon l'axe longitudinal, et la partie de montage est reliée à la première partie par l'intermédiaire d'un organe ressort.

Ce montage souple permet de suivre les variations éventuelles de hauteur de la boite.

De préférence, le deuxième élément de support et la partie de montage sont montées l'une à l'autre par l'intermédiaire d'organes de guidage en translation qui s'étendent parallèlement à l'axe longitudinal, en étant positionné de préférence de part et d'autre de l'organe ressort.

Avantageusement, l'organe de découpe comporte en outre un porte-lame muni de mâchoires commandables, la lame étant maintenue par les mâchoires commandables.

Les mâchoires commandables peuvent être actionnées en ouverture et/ou en fermeture par un vérin pneumatique.

Le sens de déplacement des mâchoires commandables est préférentiellement perpendiculaire à la face de la lame.

Pour s'assurer de la présence d'une nouvelle lame dans un magasin de lames de rechange de l'installation, la première partie comporte en outre un capteur de présence de lame. Le capteur de présence de lame est préférentiellement monté au premier élément de support. Lorsque le dispositif de découpe est amené au-dessus du magasin, le capteur de présence de lame détecte si une lame de rechange est bien présente dans le magasin.

Avantageusement, considéré dans un plan perpendiculaire à l'axe longitudinal, le patin d'appui présente une portion en « U » dans laquelle est engagé l'organe de découpe, la portion en « U » étant ouverte latéralement.

Préférentiellement, les bords latéraux de la portion en « U » sont fixés au premier et deuxième bras. Cette ouverture permet un accès plus facile à la lame pour faciliter la maintenance.

Encore de préférence, le capteur de présence de lame est monté à un côté du premier élément de support, et la portion en « U » est ouverte latéralement vers le capteur de présence de lame.

Cet agencement permet d'améliorer la détection de la présence de la lame dans le magasin de lames.

L'invention porte en outre sur une installation pour l'ouverture de boites, comprenant au moins :
un convoyeur pour déplacer les boites dans l'installation selon une direction d'avancée,
un robot de découpe muni d'un dispositif de découpe selon l'exposé, le robot de découpe ayant une tête fixée à la tête de montage du dispositif de découpe.

L'installation comporte en outre un automate agencé pour commander le dispositif sélecteur, de préférence mais non exclusivement, à partir d'un signal de commande représentatif de l'épaisseur des parois boites.

Avantageusement, l'installation comporte en outre une station de découpe incluant le robot de découpe, et une station d'ouverture de boites incluant un robot préhenseur à ventouses pour ouvrir les parois découpées, la station d'ouverture de boites étant disposé en aval de la station de découpe.

De préférence, l'installation comporte en outre un magasin de lames de rechange. Ce magasin contient des lames neuves et de préférence des supports pour recevoir les lames usées.

### Description des dessins

L'exposé sera mieux compris à la lecture de la description qui suit d'un mode de réalisation de l'exposé donné à titre d'exemple non limitatif, en référence aux dessins annexés, sur lesquels :
[Fig. **1**] La figure **1** est une vue en perspective d'une installation d'ouverture de boites en carton comprenant un dispositif de découpe selon l'exposé ;
[Fig. **2**] La figure **2** est une vue avant en perspective du dispositif de découpe selon l'exposé, dans la première position de découpe ;
[Fig. **3**] La figure **3** est une vue arrière en perspective du dispositif de découpe de la figure **2** **;**
[Fig. **4**] La figure **4** est une vue avant en perspective du dispositif de découpe selon l'exposé, dans la deuxième position de découpe ;
[Fig. **5**] La figure **5** est une vue arrière en perspective du dispositif de découpe de la figure **4** **;**
[Fig. **6**] La figure **6** est une vue de détail de la figure **2** montrant l'élément de butée de fin de course en position rétractée;
[Fig. **7**] La figure **7** est une vue de détail de la figure **3** montrant l'élément de butée de fin de course en position déployée ;
[Fig. **8**] La figure **8** est une vue de côté du dispositif de la figure **6** montrant la lame en première position de découpe ; et
[Fig. **9**] La figure **9** est une vue de côté du dispositif de la figure **7** montrant la lame en deuxième position de découpe.

### Description détaillée

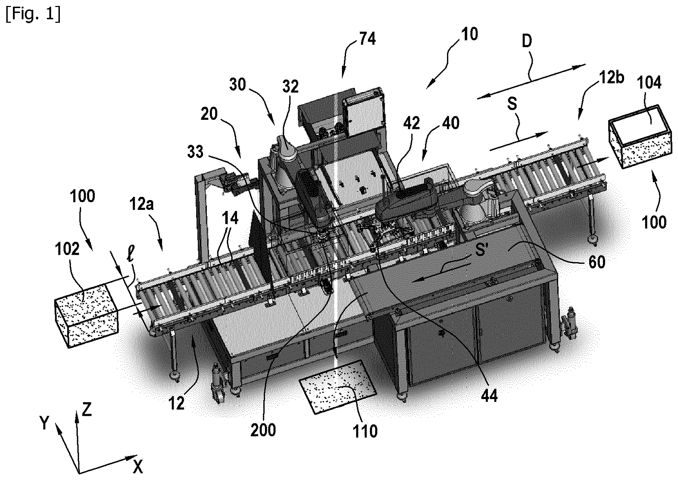

Sur la figure **1** on a illustré une installation **10** pour l'ouverture de boites, notamment des boites en carton contenant des articles. Dans cet exemple, les boites **100** sont des boites en carton, présentant une forme générale parallélépipédique, connue par ailleurs et qui sont traditionnellement utilisées pour transporter des articles. L'installation **10** a pour fonction d'ouvrir automatiquement de telles boites, et plus précisément une paroi supérieure **102** de la boite. L'installation **10** reçoit en entrée les boites **100** et fournit en sortie une boite dont la paroi supérieure **102** présente une ouverture **104.**

L'installation **10** présente un convoyeur principal **12,** dans cet exemple un convoyeur à rouleaux **14,** qui s'étend dans une direction longitudinale **D** et qui présente un sens d'avancée **S** entre une partie amont **12**a et une partie aval **12**b du convoyeur principal **12.**

Sur cette figure **1****,** on a représenté un repère **XYZ.** La direction longitudinale **D** est parallèle à l'axe **X,** la largeur du convoyeur principal s'étend selon l'axe **Y** et l'axe **Z** est vertical.

Dans la description qui suit, les termes amont et aval seront considérés en référence au sens d'avancée **S.**

Dans cet exemple, considéré selon le sens d'avancée **S,** de l'amont vers l'aval, l'installation **10** selon l'exemple de réalisation comporte successivement une station de mesure **20,** une station de découpe **30** et une station d'évacuation **40.**

On comprend que la boite est initialement déposée en partie amont **12**a du convoyeur principal **12,** c'est-à-dire en amont de la station de mesure **20.** La boite ouverte sort ensuite par la partie aval **12**b de la station d'évacuation **40.**

Disposée en aval de la station de mesure **20,** la station de découpe **30** comporte un robot de découpe **32** muni d'un dispositif de découpe **200** qui sera décrit plus en détail ci-dessous. Le robot de découpe **32** est dans cet exemple un robot multiaxes qui permet de déplacer le dispositif de découpe **200** dans l'espace selon les axes **X, Y** et **Z.** Comme il sera explicité ci-dessous, le dispositif de découpe **200** comporte deux profondeurs de découpe afin de s'adapter à l'épaisseur de la paroi supérieure **102** à découper. On précise que, dans cet exemple, l'information relative à l'épaisseur de la paroi supérieure à découper est transmise à un automate de l'installation via un signal de commande.

La station d'évacuation **40,** disposée en aval de la station de découpe **30,** comporte un robot préhenseur **42,** dans cet exemple similaire au robot de découpe. Le robot préhenseur **42** est muni d'un dispositif de préhension **44.** Dans cet exemple, le dispositif de préhension **44** comporte des organes d'aspiration se présentant sous la forme de ventouses.

Selon l'exposé, le dispositif de préhension **44** saisit la partie de paroi **110** qui a été découpée par le dispositif de découpe **100,** et le dispositif de préhension est déplacé afin de détacher la partie de paroi à découper du corps de la boite. La partie découpée est ensuite placée sur un convoyeur secondaire **60** qui s'étend parallèlement au convoyeur principal en présentant, dans cet exemple non limitatif, un sens d'avancée **S'** opposé au sens d'avancée **S** du convoyeur principal **12.**

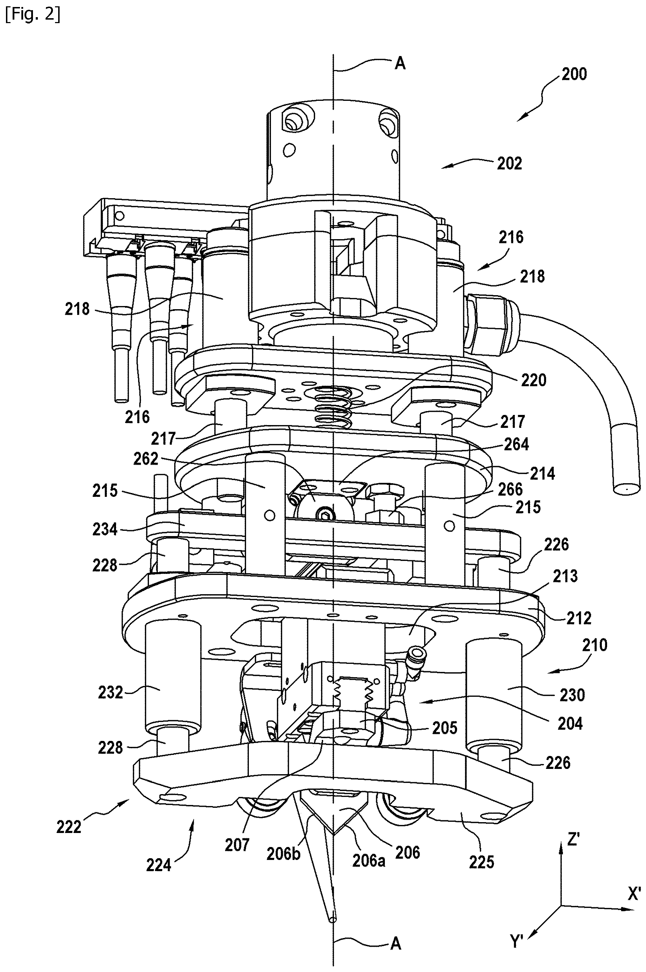

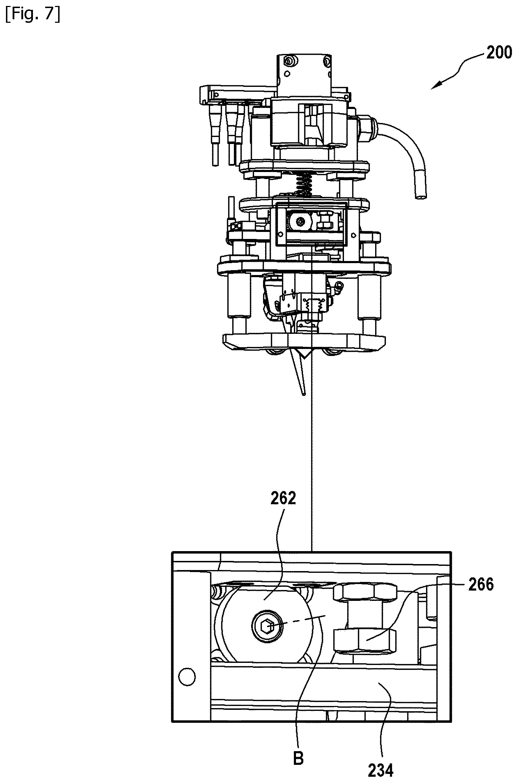

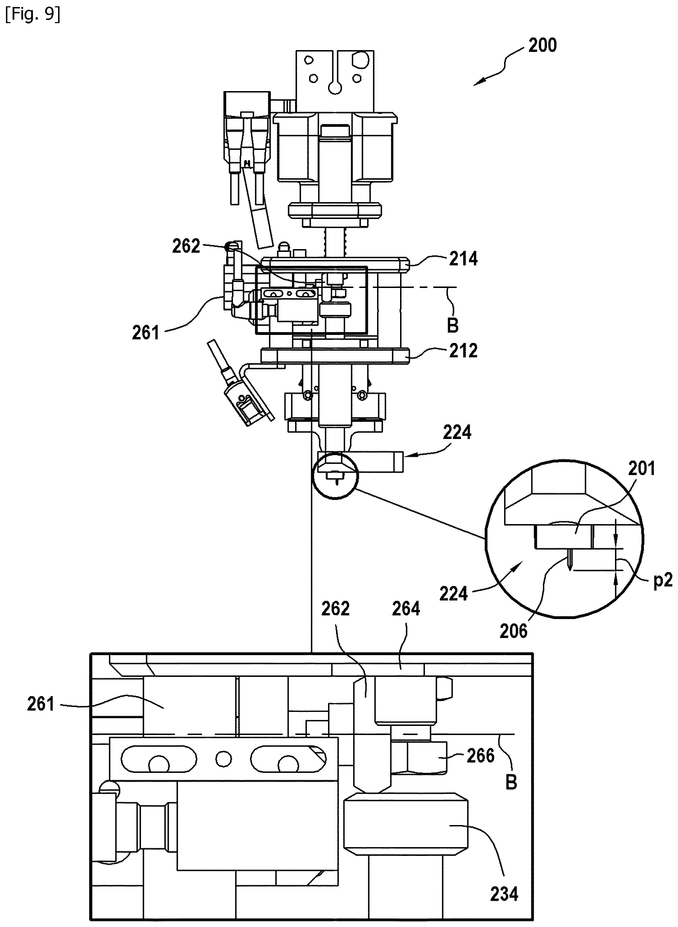

A l'aide des figures **2** à **9****,** on va décrire un dispositif de découpe **200** selon un premier exemple de réalisation.

On a représenté un repère **X'Y'Z'**, dont l'axe **Z'** est parallèle à l'axe longitudinal A du dispositif de découpe.

Comme indiqué ci-dessus, le dispositif de découpe **200** a pour fonction de réaliser une découpe dans une paroi supérieure d'une boite **100.** Le dispositif de découpe **200** s'étend selon un axe longitudinal **A** entre une partie de montage **202,** destiné à être montée à une tête **33** du robot de découpe **32,** et un organe de découpe **204** qui est muni d'une lame **206.**

La lame **206** comporte un premier bord de coupe **206**a qui définit une direction de découpe selon un axe **X'** perpendiculaire à l'axe **Z'.**

L'axe **X'** est orienté selon la direction définie par le premier bord de coupe **206a** tandis que l'axe **Y'** est orthogonal aux axes **X'** et **Z'.**

Dans cet exemple, la lame **206** présente une forme de pointe et comporte en outre un second bord de coupe **206b** qui est opposé au premier bord de coupe **206a.**

Le dispositif de découpe **200** comprend une première partie **210** comprenant l'organe de découpe **204** et un premier élément de support **212.** Dans cet exemple, l'organe de découpe **204** est fixé au premier élément de support **212.**

L'organe de découpe **204** comporte en outre un porte-lame **205** qui est muni de mâchoires commandables **207.** La lame **206** est maintenue par les mâchoires commandables **207** du porte-lame. L'ouverture des mâchoires commandables **207** pour libérer la lame est pilotable par l'automate de l'installation.

Dans cet exemple, le premier élément de support **212** se présente sous la forme d'une platine présentant une ouverture centrale **213** dans laquelle est engagé l'organe de découpe **204** tout en étant fixé sur une face supérieure du premier élément de support **212.**

La première partie **210** comporte en outre un deuxième élément de support **214,** qui est situé à distance au-dessus du premier élément de support **212** par l'intermédiaire d'entretoises **215.** Dans cet exemple, les entretoises **215** présentent la forme de barrettes s'étendant parallèlement à l'axe longitudinal **A.**

Par ailleurs, dans cet exemple, la première partie **210** est mobile en translation par rapport à la partie de montage **202** selon l'axe longitudinal **A.** Pour ce faire, la première partie **210** et la partie de montage **202** comprennent des premier et deuxième organes de guidage **216** en translation qui comportent des tiges **217** fixées au deuxième élément de support **214** et engagées dans des fourreaux **218** appartenant à la partie de montage **202.** On précise que les tiges **217** sont libres de se déplacer en translation dans les fourreaux **218** en translation parallèlement à l'axe **Z'**.

En outre, la partie de montage **202** est reliée à première partie, et plus précisément dans cet exemple au deuxième élément de support **214** par l'intermédiaire d'un organe ressort **220** qui est disposé entre les tiges **217.** Dans cet exemple, l'organe ressort est un ressort de compression qui s'étend selon l'axe **Z'.** L'organe ressort a pour fonction d'absorber des déplacements du patin d'appui selon l'axe **Z'** dus à des variations possibles de hauteur de la boite.

On comprend donc que la lame **206** est mobile par rapport à la partie de montage **202** selon l'axe longitudinal **A** via l'organe ressort **220.**

Le dispositif de découpe **200** comporte en outre une deuxième partie **222,** qui est mobile en translation par rapport à la première partie **210** selon l'axe longitudinal **A.** La deuxième partie **222** comporte un patin d'appui **224** ayant une face inférieure **225.** Le patin d'appui est conformé pour venir en appui contre la paroi de la boite à découper.

On comprend donc que le patin d'appui **224** est mobile en translation par rapport à la lame **206** selon l'axe longitudinal A. Pour ce faire, la deuxième partie **222** comprend un premier bras **226** et un deuxième bras **228** qui sont solidaires du patin d'appui **224,** les premier et deuxième bras **226, 228** sont montés coulissants par rapport au premier élément de support **212** parallèlement à l'axe longitudinal **A.** On constate que les premier et second bras **226, 228** sont engagés dans des manchons de guidage **230, 232** qui sont fixés au premier élément de support **212.** On constate par ailleurs que les premier et second bras **226, 228** sont disposés de part et d'autre de l'organe de découpe **204.** Comme on le constate notamment sur la figure **2****,** les premier et second bras **226, 228** traversent le premier élément de support **212** de façon à faire saillie au-dessus dudit premier élément de support **212.** Les premier et second bras **226, 228** sont reliés ensemble par un élément de liaison **234** qui est donc situé entre le premier élément de support **212** et le deuxième élément de support **214.** Dans cet exemple, l'élément de liaison **234** forme une barre qui s'étend selon l'axe **X'.**

L'organe ressort **220** a pour fonction d'absorber des déplacements du patin d'appui selon l'axe **Z'** dus à des variations possibles de hauteur de la boite.

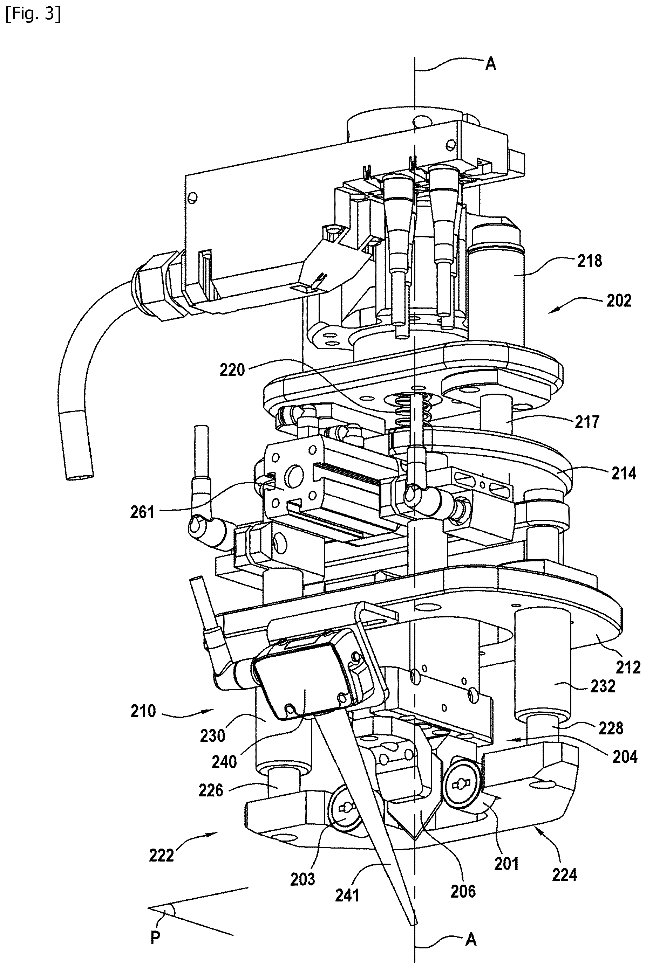

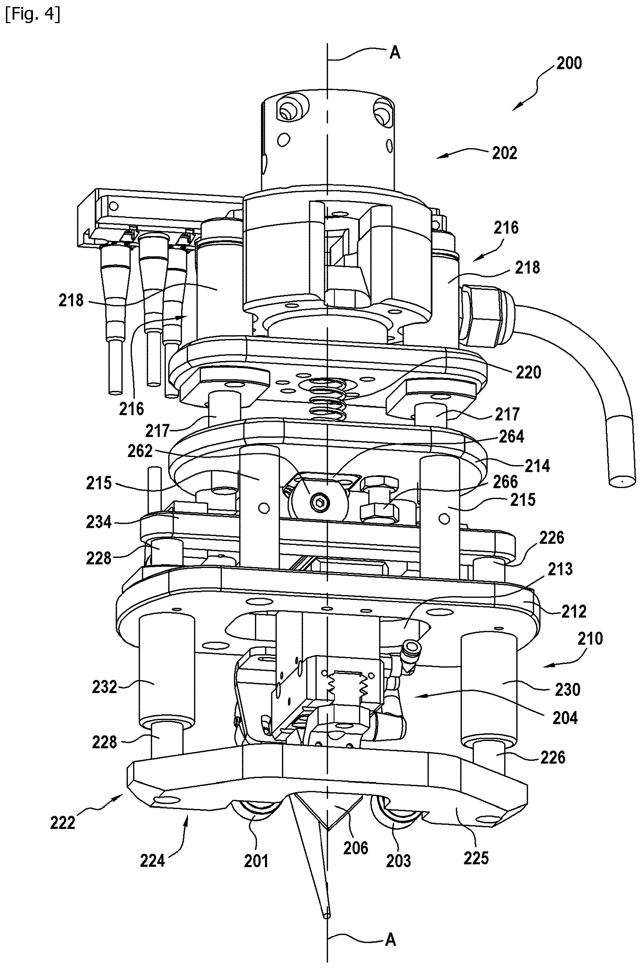

En référence aux figures **3** et **4****,** on constate que la première partie **210** comporte en outre un capteur de présence de lame **240** qui est fixé au premier élément de support **212.** Sur les figures, on a illustré le faisceau **241** du capteur de présence de lame **240** de façon schématique. La fonction du capteur de présence de lame **240** est de s'assurer de la présence d'une lame de rechange dans un magasin de lames de rechange **74** de l'installation.

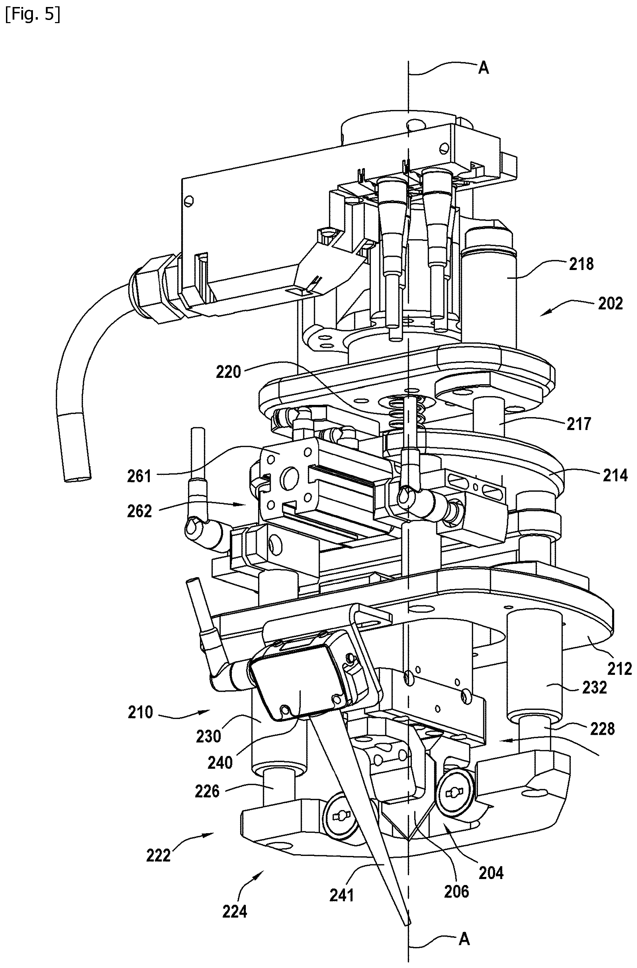

En référence aux figures 3 et **5****,** on constate que, considéré dans un plan **P** perpendiculaire à l'axe longitudinal **A,** le patin d'appui **224** présente une portion en « U » dans laquelle est engagé l'organe de découpe **204,** la portion en « U » étant ouverte latéralement vers le capteur de présence de lame **240.**

Par ailleurs, le patin d'appui **224** comporte en outre une première roulette d'appui **201** et une deuxième roulette d'appui **203** qui sont disposées de part et d'autre de la lame **206,** les première et deuxième roulettes **201, 203** étant agencées pour venir en appui contre la paroi de la boite à découper pendant l'opération de découpe. Elles servent aussi à faciliter le déplacement du patin d'appui pendant l'opération de découpe.

Sans sortir du cadre de la présente invention, les roulettes d'appui pourraient être remplacées par des bossages du patin d'appui **224.**

Selon l'exposé, le dispositif de découpe **200** présente au moins une première et une deuxième positions de découpe correspondant à au moins deux profondeurs de découpe différentes de la paroi, la lame **206** faisant saillie axialement au-delà du patin d'appui lorsque le dispositif de découpe est dans sa première ou deuxième positions de découpe. Dans cet exemple, la lame **206** fait saillie axialement au-delà des première et deuxième roulettes d'appui.

La surface d'appui du patin d'appui est, dans cet exemple, constitué par les faces périphériques de première et deuxième roulettes d'appui.

Sur les figures **2** et **3****,** on a illustré le dispositif de découpe dans sa première position de découpe, la profondeur de découpe étant de l'ordre de 7 mm, tandis que sur les figures **3** et **5** on a illustré le dispositif de découpe **200** dans sa deuxième position de découpe, la deuxième profondeur de découpe étant de l'ordre de 4 mm.

Dans la première position de découpe, illustrée en figures **2****,** **4****,** **6** et **8****,** le patin d'appui **224** est à une première distance axiale **d1** du premier élément de support **212,** de sorte que la lame **206** s'étend selon l'axe **Z'** au-delà du patin d'appui **224** - dans cet exemple au-delà de la première roulette d'appui **201** - sur une première longueur correspondant à une première profondeur de découpe **p1.**

Par ailleurs, dans la deuxième position de découpe illustrée en figures **3****,** **5****,** **7** et **9****,** le patin d'appui **224** est à une deuxième distance axiale **d2** du premier élément de support **212,** de sorte que la lame **206** s'étend axialement au-delà du patin d'appui - dans cet exemple au-delà de la première roulette d'appui **201** - sur une deuxième longueur correspondant à une deuxième profondeur de découpe **p2.** On comprend à l'aide des figures que la première profondeur de découpe **p1** est supérieure à la deuxième profondeur de découpe **p2.**

Le dispositif de découpe **200** comporte en outre un dispositif sélecteur **260** pour sélectionner la première position de découpe ou la deuxième position de découpe. Pour ce faire, dans cet exemple, le dispositif sélecteur **260** comporte un élément de butée de fin de course **262** qui est rétractable.

L'élément de butée de fin de course **262** présente une position déployée illustrée en figures **3****,** **5****,** **7** et **9** dans laquelle la deuxième partie est en appui contre l'élément de butée de fin de course **262** lorsque le dispositif de découpe est dans la deuxième position de découpe. Plus précisément, l'élément de liaison **234** forme un élément de contact qui vient contre l'élément de butée de fin de course **262** lorsque le dispositif de découpe est dans la deuxième position de découpe.

Comme expliqué ci-dessus, la première partie est mobile par rapport à la deuxième partie de sorte que lorsque les roulettes d'appui **201, 203** viennent en appui contre la paroi à découper, la deuxième partie se déplace alors axialement vers la partie de montage jusqu'à ce que l'élément de liaison **234** vienne en appui contre l'élément de butée de fin de course **262** définissant ainsi la deuxième profondeur de découpe. Dans cet exemple, l'élément de butée de fin de course **262** présente une forme générale d'un disque comportant un méplat inférieur et un méplat supérieur, le méplat inférieur formant une butée de fin de course pour l'élément de liaison **234** tandis que le méplat supérieur vient en appui contre le deuxième élément de support **214.**

Pour éviter d'endommager le deuxième élément de support **214,** la première partie comporte en outre un élément de reprise d'effort **264** qui est situé axialement au-dessus de l'élément de butée de fin de course. L'élément de reprise d'effort est une pièce en acier logée dans le deuxième élément de support **214.** On comprend que, en position déployée, l'élément de butée de fin de course est en contact avec l'élément de reprise d'effort **264,** de sorte que les impacts de l'élément de liaison **234** sur l'élément de butée de fin de course **262** sont repris par l'élément de reprise d'effort **264.**

L'élément de butée de fin de course **262** comporte par ailleurs une position rétractée illustrée en figures **2****,** **4****,** **6** et **8** dans laquelle l'élément de butée de fin de course ne limite pas le déplacement axial de la deuxième partie par rapport à la première partie. En d'autres termes, en position rétractée, l'élément de butée de fin de course **262** ne coopère pas avec l'élément de liaison **234.**

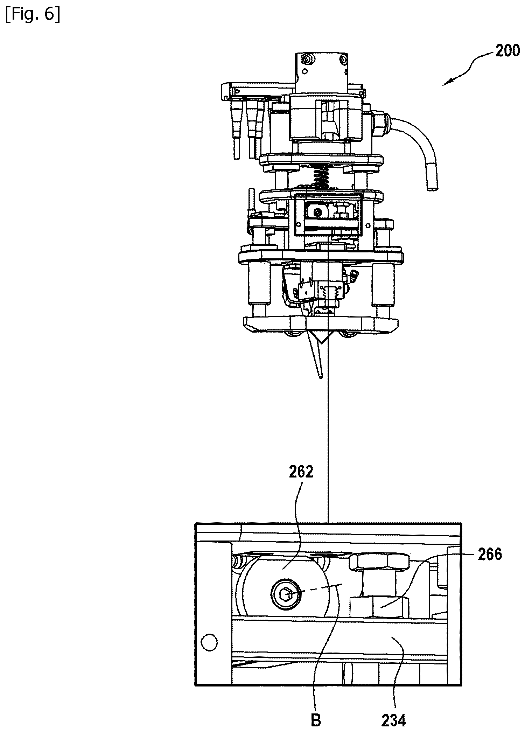

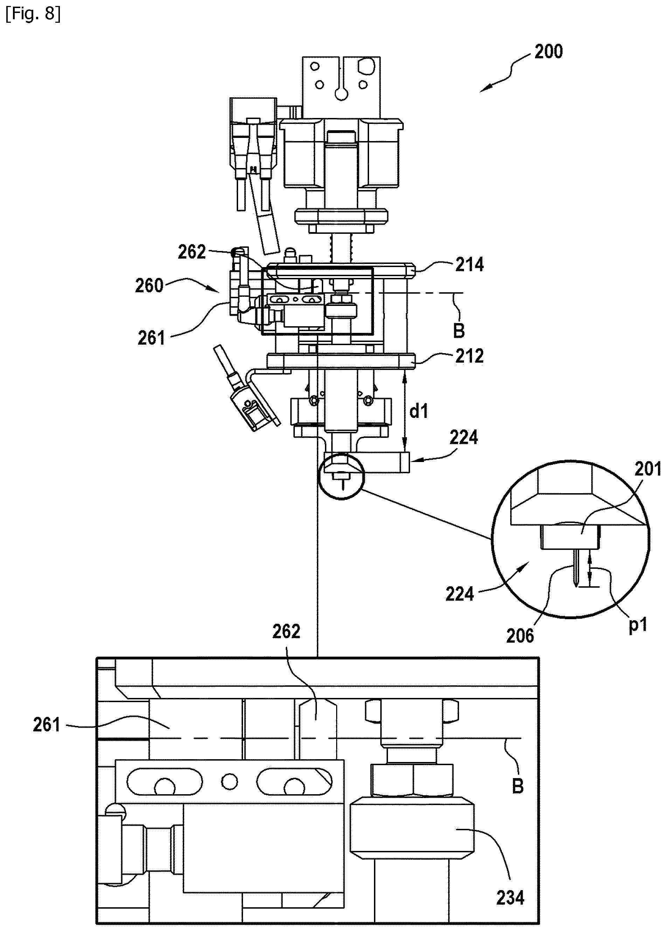

L'élément de liaison **234** peut ainsi se déplacer par rapport à la première partie axialement au-delà de l'élément de butée. La première partie comporte en outre un organe de butée de fin de course **266** pour stopper la course du patin d'appui **224** en première position de découpe lorsque l'élément de butée de fin de course **262** est en position rétractée. En référence aux figures **6** et **8****,** on comprend que l'élément de liaison **234** vient en butée contre l'organe de butée de fin de course **266** lorsque le dispositif de découpe est dans sa première position de découpe.

On constate sur les figures que, considéré selon l'axe longitudinal **A,** l'élément de butée de fin de course **262** est disposé entre l'organe de butée de fin de course **266** et le patin d'appui **224.**

Pour déplacer l'élément de butée de fin de course **262** entre sa position rétractée et sa position déployée, la première partie comporte en outre un actionneur **261** qui se présente sous la forme d'un vérin pneumatique permettant de déplacer l'élément de butée de fin de course selon une direction de déplacement **B** qui est transversale à l'axe longitudinal **A.**

## Revendications

1. Dispositif de découpe (200) pour réaliser une découpe dans une paroi d'une boite (100), ledit dispositif de découpe (200) s'étendant selon un axe longitudinal (A) entre une partie de montage (202) à une tête de robot (32) et un organe de découpe (204) muni d'une lame (206), la lame ayant au moins un premier bord de coupe (206a) , le dispositif de découpe comportant :
une première partie (210) comprenant un premier élément de support (212);
une deuxième partie (222), mobile en translation par rapport à la première partie selon l'axe longitudinal, la deuxième partie comportant un patin d'appui (224) ayant une surface d'appui (225), en sorte que le patin d'appui est mobile en translation par rapport à la lame selon l'axe longitudinal (A);
**caractérisé en ce que** :
la première partie (210) du dispositif de découpe (200) comprend l'organe de découpe (204),
**en ce que** ledit dispositif de découpe présente au moins une première et une deuxième positions de découpe correspondant à au moins deux profondeurs de découpe différentes de la paroi, la lame faisant saillie axialement au-delà du patin d'appui lorsque le dispositif de découpe est dans sa première ou deuxième positions de découpe,
**en ce que**, dans la première position de découpe, le patin d'appui est à une première distance axiale (d1) du premier élément de support, de sorte que la lame s'étend au-delà du patin d'appui sur une première longueur correspondant à une première profondeur de découpe (p1), et dans lequel, dans la deuxième position de découpe, le patin d'appui est à une deuxième distance axiale (d2) du premier élément de support de sorte que la lame s'étend au-delà de la surface d'appui sur une deuxième longueur correspondant à une deuxième profondeur de découpe (p2), la première profondeur de découpe (p1) étant supérieure à la deuxième profondeur de découpe (p2),
et **en ce que** le dispositif de découpe comporte en outre un dispositif sélecteur (260) pour sélectionner la première position de découpe ou la deuxième position de découpe.

2. Dispositif de découpe selon la revendication 1, dans lequel le dispositif sélecteur (260) comporte un élément de butée de fin de course (262) qui est rétractable et qui présente une position déployée dans laquelle la deuxième partie est en appui contre l'élément de butée de fin de course lorsque le dispositif de découpe est dans la deuxième position de découpe, et une position rétractée dans laquelle l'élément de butée de fin de course ne limite pas le déplacement axial de la deuxième partie par rapport à la première partie.

3. Dispositif de découpe selon la revendication 2, dans lequel la première partie comporte en outre un actionneur (261) pour déplacer l'élément de butée de fin de course (262) entre sa position rétractée et sa position déployée.

4. Dispositif de découpe selon la revendication 3, dans lequel l'actionneur est configuré pour déplacer l'élément de butée selon une direction de déplacement (B) qui est transversale à l'axe longitudinal (A).

5. Dispositif de découpe selon la revendication 3 ou 4, dans lequel l'actionneur est fixé à un deuxième élément de support (214) de la première partie, le deuxième élément de support (214) étant situé à distance au-dessus du premier élément de support (212).

6. Dispositif de découpe selon l'une quelconque des revendications 2 à 5, dans lequel la première partie comporte en outre un élément de reprise d'effort (264) situé axialement au-dessus de l'élément de butée de fin de course, et dans lequel, en position déployée, l'élément de butée de fin de course est en contact avec l'élément de reprise d'effort.

7. Dispositif selon l'une quelconque des revendications 2 à 6, dans lequel la deuxième partie (222) comprend en outre au moins un premier bras (226) solidaire du patin d'appui et monté coulissant par rapport au premier élément de support selon l'axe longitudinal, le premier bras traversant le premier élément de support, la deuxième partie comprenant en outre un élément de contact, relié au premier bras et dans lequel l'élément de contact est en appui contre l'élément de butée de fin de course (260) lorsque le dispositif de découpe est en deuxième position de découpe.

8. Dispositif selon la revendication 7, dans lequel la deuxième partie comporte en outre un deuxième bras monté (228) coulissant par rapport au premier élément de support et solidaire du patin d'appui, le deuxième bras traversant le premier élément de support, les premier et deuxième bras étant disposés de part et d'autre de l'organe de découpe et l'élément de contact constituant un élément de liaison (234) reliant ensemble les premier et deuxièmes bras.

9. Dispositif de découpe selon l'une quelconque des revendications 2 à 8, dans lequel la première partie comporte en outre un organe de butée de fin de course (266) agencé pour stopper la course du patin d'appui en première position du dispositif de découpe lorsque l'élément de butée de fin de course est en position rétractée, et dans lequel, considéré selon l'axe longitudinal, l'élément de butée de fin de course est disposé entre l'organe de butée de fin de course et le patin d'appui.

10. Dispositif de découpe selon l'une quelconque des revendications précédentes, dans lequel le patin d'appui (224) comporte en outre au moins une première roulette d'appui (201) pour venir en appui contre la paroi de la boite.

11. Dispositif de découpe selon l'une quelconque des revendications précédentes, dans lequel la lame (206) comporte en outre un deuxième bord de coupe (206b) qui est opposé au premier bord de coupe, et dans lequel la lame présente de préférence une forme en pointe.

12. Dispositif de découpe selon l'une quelconque des revendications précédentes, dans lequel la première partie est mobile en translation par rapport à la partie de montage selon l'axe longitudinal (A), et la partie de montage est reliée à la première partie par l'intermédiaire d'un organe ressort (220).

13. Dispositif de découpe selon l'une quelconque des revendications précédentes, dans lequel l'organe de découpe comporte en outre un porte-lame (205) muni de mâchoires commandables, la lame (206) étant maintenue par les mâchoires commandables (207).

14. Dispositif de découpe selon l'une quelconque des revendications précédentes, dans lequel la première partie (210) comporte en outre un capteur de présence de lame (240).

15. Dispositif de découpe selon l'une quelconque des revendications précédentes, dans lequel, considéré dans un plan perpendiculaire à l'axe longitudinal (A), le patin d'appui présente une portion en « U » dans laquelle est engagé l'organe de découpe, la portion en « U » étant ouverte latéralement.

16. Dispositif de découpe selon les revendications 14 et 15, dans lequel le capteur de présence de lame (240) est monté à un premier élément de support, et dans lequel la portion en « U » est ouverte latéralement vers le capteur de présence de lame.

17. Installation (10) pour l'ouverture de boites, comprenant au moins :
un convoyeur (12) pour déplacer les boites dans l'installation selon une direction d'avancée (S),
un robot de découpe (32) muni d'un dispositif de découpe (200) selon l'une quelconque des revendications précédentes, le robot de découpe ayant une tête (33) fixée à la tête de montage du dispositif de découpe.

## Patentansprüche

1. Schneidevorrichtung (200) zum Durchführen eines Schnitts in einer Wand eines Behälters (100), wobei sich die Schneidevorrichtung (200) gemäß einer longitudinalen Achse (A) zwischen einem Montageteil (202) an einem Roboterkopf (32) und einem Schneidelement (204) erstreckt, welches mit einer Klinge (206) versehen ist, wobei die Klinge wenigstens eine erste Schneidkante (206a) aufweist, wobei die Schneidevorrichtung umfasst:
einen ersten Teil (210), welcher ein erstes Trageelement (212) umfasst;
einen zweiten Teil (222), welcher in Translation bezüglich des ersten Teils gemäß der longitudinalen Achse bewegbar ist, wobei der zweite Teil eine Anlagekufe (224) umfasst, welche eine Anlagefläche (225) derart aufweist, dass die Anlagekufe in Translation bezüglich der Klinge gemäß der longitudinalen Achse (A) bewegbar ist;
**dadurch gekennzeichnet, dass**:
der erste Teil (210) der Schneidevorrichtung (200) das Schneidelement (204) umfasst,
dass die Schneidevorrichtung wenigstens eine erste und eine zweite Schneidposition aufweist, welche wenigstens zwei unterschiedlichen Schneidtiefen der Wand entsprechen, wobei die Klinge axial über die Anlagekufe übersteht, wenn die Schneidevorrichtung in ihrer ersten oder zweiten Schneidposition ist,
dass sich in der ersten Schneidposition die Anlagekufe in einer ersten axialen Distanz (d1) von dem ersten Trageelement derart befindet, dass sich die Klinge über die Anlagekufe um eine erste Länge erstreckt, welche einer ersten Schneidtiefe (p1) entspricht, und wobei sich in der zweiten Schneidposition die Anlagekufe bei einer zweiten axialen Distanz (d2) von dem ersten Trageelement derart befindet, dass sich die Klinge über die Anlagefläche um eine zweite Länge erstreckt, welche einer zweiten Schneidtiefe (p2) entspricht, wobei die erste Schneidtiefe (p1) größer als die zweite Schneidtiefe (p2) ist,
und dass die Schneidevorrichtung ferner eine Auswahlvorrichtung (260) zum Auswählen der ersten Schneidposition oder der zweiten Schneidposition umfasst.

2. Schneidevorrichtung nach Anspruch 1, wobei die Auswahlvorrichtung (260) ein Wegende-Anschlagelement (262) umfasst, welches einziehbar ist und welches eine ausgefahrene Position, in welcher der zweite Teil in Anlage gegen das Wegende-Anlageelement ist, wenn sich die Schneidevorrichtung in der zweiten Schneidposition befindet, und eine eingezogene Position aufweist, in welcher das Wegende-Anschlagelement die axiale Verlagerung des zweiten Teils bezüglich des ersten Teils nicht begrenzt.

3. Schneidevorrichtung nach Anspruch 2, wobei der erste Teil ferner einen Aktor (261) zum Verlagern des Wegende-Anschlagelements (262) zwischen seiner eingezogenen Position und seiner ausgefahrenen Position umfasst.

4. Schneidevorrichtung nach Anspruch 3, wobei der Aktor dazu eingerichtet ist, das Anschlagelement gemäß einer Verlagerungsrichtung (B) zu verlagern, welche transversal zu der longitudinalen Achse (A) ist.

5. Schneidevorrichtung nach Anspruch 3 oder 4, wobei der Aktor an einem zweiten Trageelement (214) des ersten Teils befestigt ist, wobei das zweite Trageelement (214) in einer Distanz oberhalb des ersten Trageelements (212) angeordnet ist.

6. Schneidevorrichtung nach einem der Ansprüche 2 bis 5, wobei der erste Teil ferner ein Krafthalte-Element (264) umfasst, welches axial oberhalb des Wegende-Anschlagelements angeordnet ist, und wobei in der ausgefahrenen Position das Wegende-Anschlagelement in Kontakt mit dem Krafthalte-Element ist.

7. Vorrichtung nach einem der Ansprüche 2 bis 6, wobei der zweite Teil (222) ferner wenigstens einen ersten Arm (226) umfasst, welcher mit der Anlagekufe verbunden und gleitend bezüglich des ersten Trageelements gemäß der longitudinalen Achse montiert ist, wobei der erste Arm das erste Trageelement durchtritt, wobei der zweite Teil ferner ein Kontaktelement umfasst, welches an dem ersten Arm angebracht ist, und wobei das Kontaktelement in Anlage gegen das Wegende-Anschlagelement (260) ist, wenn die Schneidevorrichtung in der zweiten Schneidposition ist.

8. Vorrichtung nach Anspruch 7, wobei der zweite Teil ferner einen zweiten Arm (228) umfasst, welcher gleitend bezüglich des ersten Trageelements und mit der Anlagekufe verbunden montiert ist, wobei der zweite Arm das erste Trageelement durchtritt, wobei die ersten und zweiten Arme beiderseits des Schneidelements angeordnet sind und das Kontaktelement ein Verbindungselement (234) bildet, welches die ersten und zweiten Arme miteinander verbindet.

9. Schneidevorrichtung nach einem der Ansprüche 2 bis 8, wobei der erste Teil ferner ein Wegende-Anschlagmittel (266) umfasst, welches dazu angeordnet ist, den Weg der Anlagekufe in der ersten Position der Schneidevorrichtung zu stoppen, wenn das Wegende-Anschlagelement in der eingezogenen Position ist, und wobei gemäß der longitudinalen Achse betrachtet das Wegende-Anschlagelement zwischen dem Wegende-Anschlagmittel und der Anlagekufe angeordnet ist.

10. Schneidevorrichtung nach einem der vorhergehenden Ansprüche, wobei die Anlagekufe (224) ferner wenigstens eine erste Anlagerolle (201) umfasst, um in Anlage gegen die Wand des Behälters zu kommen.

11. Schneidevorrichtung nach einem der vorhergehenden Ansprüche, wobei die Klinge (206) ferner eine zweite Schneidkante (206b) umfasst, welche der ersten Schneidkante gegenüberliegt, und wobei die Klinge vorzugsweise eine spitze Form aufweist.

12. Schneidevorrichtung nach einem der vorhergehenden Ansprüche, wobei der erste Teil in Translation bezüglich des Montageteils gemäß der longitudinalen Achse (A) bewegbar ist und der Montageteil an dem ersten Teil mittels eines Federelements (220) angebracht ist.

13. Schneidevorrichtung nach einem der vorhergehenden Ansprüche, wobei das Schneidelement ferner einen Klingenträger (205) umfasst, welcher mit steuerbaren Backen versehen ist, wobei die Klinge (206) durch die steuerbaren Backen (207) gehalten ist.

14. Schneidevorrichtung nach einem der vorhergehenden Ansprüche, wobei der erste Teil (210) ferner einen Klingenpräsenz-Sensor (240) umfasst.

15. Schneidevorrichtung nach einem der vorhergehenden Ansprüche, wobei in einer Ebene senkrecht zu der longitudinalen Achse (A) betrachtet die Anlagekufe einen Teil in U-Form aufweist, in welchem das Schneidelement eingreift, wobei der Teil in U-Form lateral geöffnet ist.

16. Schneidevorrichtung nach den Ansprüchen 14 und 15, wobei der Klingenpräsenz-Sensor (240) an einem ersten Trageelement montiert ist, und wobei der Teil in U-Form lateral zu dem Klingenpräsenz-Sensor geöffnet ist.

17. Einrichtung (10) zum Öffnen von Behältern, wenigstens umfassend:
ein Fördermittel (12) zum Verlagern der Behälter in der Einrichtung gemäß einer Vorschubrichtung (S),
einen Schneidroboter (32), welcher mit einer Schneidevorrichtung (200) nach einem der vorhergehenden Ansprüche versehen ist, wobei der Schneidroboter einen Kopf (33) aufweist, welcher an dem Montagekopf der Schneidevorrichtung befestigt ist.

## Claims

1. A cutting device (200) for performing a cut in a wall of a box (100), said cutting device (200) extending along a longitudinal axis (A) between a mounting part (202) for a robotic head (32) and a cutting member (204) provided with a blade (206), the blade having at least one first cutting edge (206a), the cutting device including:
a first part (210) comprising a first support element (212);
a second part (222), movable in translation relative to the first part along the longitudinal axis, the second part including a footpad (224) having a bearing surface (225), so that the footpad is movable in translation relative to the blade along the longitudinal axis (A);
characterizedin that :
the first part (210) of the cutting device comprises the cutter member (204)
and in that said cutting device has at least one first and one second cutting positions corresponding to at least two different positions for cutting the wall, the blade protruding axially beyond the footpad when the cutting device is in its first or second cutting position,
and in that, in the first cutting position, the footpad is at a first axial distance (d1) from the first supporting element, so that the blade extends beyond the footpad over a first length corresponding to a first cutting depth (p1) and wherein, in the second cutting position, the footpad is at a second axial distance (d2) from the first support element so that the blade extends beyond the bearing surface over a second length corresponding to a second cutting depth (p2), the first cutting depth (p1) being greater than the second cutting depth (p2),wherein the cutting device further includes a selecting device (260) for selecting the first cutting position or the second cutting position.

2. The cutting device according to claim 1, wherein the selection device (260) includes an end-of-stroke stop element (262) which is retractable and which has a deployed position in which the second part is supported against the end-of-stroke stop element when the cutting device is in the second cutting position, and a retracted position in which the end-of-stroke stop element does not limit the axial movement of the second part relative to the first part.

3. The cutting device according to claim 2, wherein the first part further includes an actuator (261) for moving the end-of-stroke stop element (262) between its retracted position and its deployed position.

4. The cutting device according to claim 3, wherein the actuator is configured to move the stop element in a movement direction (B) which is transverse to the longitudinal axis (A).

5. The cutting device according to claim 3 or 4, wherein the actuator is attached to a second support element (214) of the first part, the second support element (214) being located at a distance above the first support element (212).

6. The cutting device according to one of claims 2 to 5, wherein the first part further includes a load absorption element (264) located axially above the end-of-stroke stop element and wherein, in the deployed position, the end-of-stroke stop element is in contact with the load absorption element.

7. A device according to any one of claims 2 to 6, wherein the second part (222) further comprises at least one first arm (226) integral with the footpad and mounted sliding relative the first support element along the longitudinal axis, the first arm crossing the first support element, the second part further comprising a contact element, connected to the first arm and wherein the contact element is bearing against the end-of-stroke stop element (260) when the cutting device is in the second cutting position.

8. The device according to claim 7, wherein the second part further includes a second arm (228) mounted sliding relative to the first support element and integral with the footpad, the second arm crossing the first support element, the first and second arms being located on either side of the cutting member and the contact element constituting an element (234) connecting the first and second arms together.

9. The cutting device according to any one of claims 2 to 8, wherein the first part further includes an end-of-stroke stop member (266) arranged to stop the stroke of the footpad in the first position of the cutting device when the end-of-stroke stop element is in the retracted position, and wherein, considered in the horizontal axis, the end-of-stroke stop element is located between the end-of-stroke stop member and the footpad.

10. The cutting device according to any one of the preceding claims, wherein the footpad (224) further includes at least one supporting roller (201) to bear against the wall of the box.

11. The cutting device according to any one of the preceding claims, wherein the blade (206) further includes a second cutting edge (206b) which is opposite to the first cutting edge, and wherein the blade preferably has a pointed shape.

12. The cutting device according to any one of the preceding claims, wherein the first part is movable in translation relative to the mounting part along the longitudinal axis (A), and the mounting part is connected to the first part by means of a spring member (220).

13. The cutting device according to any one of the preceding claims, wherein the cutting member further comprises a blade holder (205) provided with controllable jaws, the blade (206) being held by the controllable jaws (207).

14. The cutting device according to any one of the preceding claims, wherein the first part (210) further includes a blade presence sensor (240).

15. The cutting device according to any one of the preceding claims, wherein, considered in a plane perpendicular to the longitudinal axis (A), the footpad has a "U" shaped portion, wherein the cutting member is engaged, the "U" shaped portion being open laterally.

16. The cutting device according to claims 14 and 15, wherein the blade presence sensor (240) is mounted on a first support element, and wherein the "U" shaped portion is open laterally toward the blade presence sensor.

17. An installation (10) for opening boxes, comprising at least:
one conveyor (12) for moving the boxes in the installation in a direction of travel (S),
a cutting robot (32) provided with a cutting device (200) according to any one of the preceding claims, the cutting robot having a head (33) attached to the mounting head of the cutting device.
